# EUROPEAN PATENT SPECIFICATION

(11) **EP 2 437 391 B1**
(45) Date of publication and mention of the grant of the patent: **11.11.2020**
(21) Application number: 09845200.6
(22) Date of filing: 27.05.2009
(51) Int. Cl.: H02P 27/06, H02P 6/185, H02P 6/18

(54) **DEVICE FOR ESTIMATING MAGNETIC POLE POSITION IN SYNCHRONOUS MOTOR**
EINRICHTUNG ZUR SCHÄTZUNG DER MAGNETPOLPOSITION IN EINEM SYNCHRONMOTOR
DISPOSITIF D'ESTIMATION DE POSITION DE PÔLE MAGNÉTIQUE DANS UN MOTEUR SYNCHRONE

(43) Date of publication of application: 04.04.2012
(73) Proprietor: Mitsubishi Electric Corporation, Tokyo 100-8310 (JP)
(72) Inventor: BABA, Toshiyuki, Tokyo 100-8310 (JP); YASUE, Masanori, Tokyo 100-8310 (JP)
(74) Representative: Hoffmann Eitle
(86) International application number: PCT/JP2009/059689
(87) International publication number: WO 2010/137133

(56) References cited:
- JP-A- 2003 180 094
- JP-A- 2003 299 382
- JP-A- 2008 054 430
- JP-A- 2008 054 430

## Description

### Technical Field

The present invention relates to a magnetic pole position estimation device for a synchronous motor, for estimating a position of a magnetic pole of the synchronous motor without using a position detector, such as an encoder.

### Background Art

As to the synchronous motor, there is known a magnetic pole position estimation device for a synchronous motor, for estimating an initial magnetic pole position of the rotor in the range of an electrical angle of 60 degrees based on the magnitude relation between current peak values accompanying magnetic saturation which is caused when a pulse voltage is applied (see, for example, Patent Literature 1).

This enables the synchronous motor to start up without loss of synchronism, and after the speed increases, magnetic pole correction is performed by an induced voltage, thereby enabling stable operation.

In the magnetic pole position estimation device for a synchronous motor described in Patent Literature 1, however, the initial magnetic pole position of the rotor is estimated only in the range of the electrical angle of 60 degrees. Accordingly, in applications, including an elevator, in which fine torque control or sufficient acceleration torque is required at the time of start-up of the synchronous motor, there has been a problem of low estimation precision of the initial magnetic pole position of the rotor.

JP 2003 180094 A describes a method for estimating pole position of a permanent magnet motor to reduce an error of estimated phase due to noise at the time of estimating a pole position from the variation of a current generated upon application of a pulse voltage to a synchronous motor. In the method, a single pulse measuring section does not measure current variation directly upon application of a pulse voltage but sets intervals for generating a voltage of low current variation before and after application of the pulse voltage and averages a plurality of currents sampled during these intervals. A pulse width/phase estimating section performs statistic processing by Fourier coefficients for estimating the phase of d axis from the measurements of a current difference vector dependent on the pulse voltage thus reducing the effect of noise. The current variation includes the amplitude and the phase component, but two kinds of information are not handled individually but integrated information is subjected to Fourier transform, thus enhancing the accuracy of estimated phase.

JP 2008 054430 A describes a method for a magnetic pole location estimation of a PM motor, to automatically adjust a "pulse voltage value" and "current L level" conforming to characteristics of a PM motor in a method for performing automatic current control, ACR, based on the "current L level" and initial pole position estimation based on the "pulse voltage value" to be applied after the "current L level". In the method, pulse voltage in 12 directions is applied, a gap current between the maximum value and the minimum value among the output "current H level" by the pulse voltage application, and a gap current between the "current H level" of the maximum value and the "current H level" to the pulse voltage which becomes 180-degree phase gap are obtained, and the "pulse voltage value" is gradually raised until the gap current becomes the prescribed value or higher and the gap current becomes a prescribed value or higher. This method also includes a step for sampling output current while the automatic current control is performed a plurality of times, and the "current L level" is gradually raised until the error of the respective sample current values becomes the prescribed value or lower and the error of the mean value of the respective sampled current values becomes the prescribed value or less.

In order to solve the above-mentioned problem, the following magnetic pole position estimation device for a synchronous motor has been proposed.

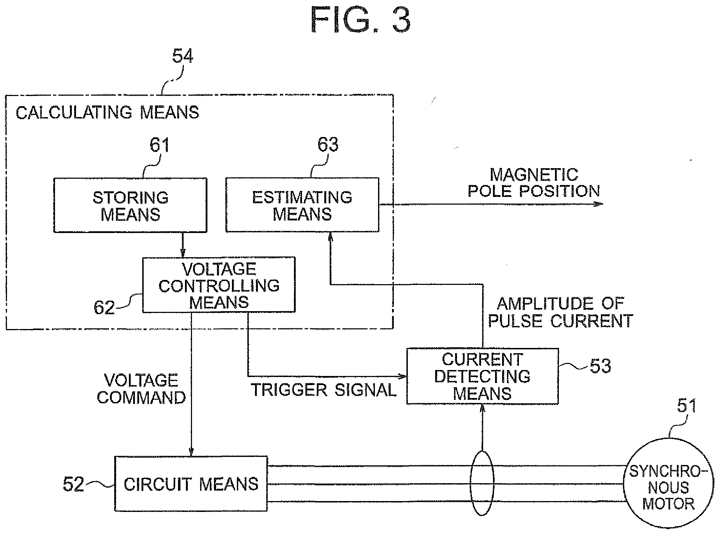

FIG. 3 is a block configuration diagram illustrating a conventional magnetic pole position estimation device for a synchronous motor.

Referring to FIG. 3, the magnetic pole position estimation device for a synchronous motor includes a synchronous motor 51, circuit means 52 (voltage applying means), current detecting means 53, and calculating means 54.

The synchronous motor 51 has a rotor (not shown) formed of a permanent magnet. Further, the synchronous motor 51 has a plurality of phases. Specifically, the synchronous motor 51 has three phases of U-phase, V-phase, and W-phase. The phases are each connected to the circuit means 52. The circuit means 52 applies a pulse voltage to each of the phases of the synchronous motor 51 based on a voltage command supplied from the calculating means 54. At this time, a current corresponding to the applied voltage flows through each of the phases of the synchronous motor 51. The current detecting means 53 detects the current flowing through each of the phases of the synchronous motor 51 and outputs the results of detection to the calculating means 54. The calculating means 54 calculates the position of the magnetic pole of the rotor based on detected current values supplied from the current detecting means 53.

Through the above-mentioned control, in the synchronous motor 51 to which the pulse voltage is applied based on the voltage command from the calculating means 54, when the phase of the magnetic pole of the rotor and the phase of the applied voltage are in the same direction, the magnetic flux due to the current generated by the applied voltage and the magnetic flux of the magnet of the rotor are also in the same direction. As a result, a combined value of the magnetic fluxes becomes large to cause magnetic saturation in the motor core. Then, during the magnetic saturation, the winding inductance of the phase of the synchronous motor 51 becomes small. Accordingly, the current flowing through the phase of the synchronous motor 51 exhibits a large amplitude.

On the other hand, when the phase of the magnetic pole of the rotor and the phase of the applied voltage are in opposite directions, the magnetic flux due to the current generated by the applied voltage and the magnetic flux of the magnet of the rotor are also in opposite directions. As a result, a combined value of the magnetic fluxes becomes small to cause no magnetic saturation in the motor core. Then, during the magnetic non-saturation, the winding inductance of the phase of the synchronous motor 51 becomes large. Accordingly, the current flowing through the phase of the synchronous motor 51 exhibits a small amplitude.

In other words, depending on the relation between the phase of the magnetic pole of the rotor and the phase of the applied voltage, the degree of magnetic saturation in the motor core is varied, and the amplitude of the current flowing through the phase of the synchronous motor 51 is varied.

The conventional magnetic pole position estimation device for a synchronous motor utilizes the above-mentioned phenomenon to estimate an initial magnetic pole position of the rotor.

Also referring to FIG. 3, the calculating means 54 includes storing means 61, voltage controlling means 62, and estimating means 63.

The storing means 61 stores a plurality of voltage command vectors having the same amplitude with phase differences obtained by equally dividing 360 degrees.

At the time of starting the rotation of the rotor, the voltage controlling means 62 causes the circuit means 52 to sequentially switch and apply a plurality of pulse voltages for magnetic pole position estimation to each of the phases of the synchronous motor 51 based on the voltage commands obtained by transforming the voltage command vectors . At this time, the voltage controlling means 62 outputs the voltage command to the circuit means 52 and also outputs a trigger signal to the current detecting means 53 in synchronization with the voltage command. Using the trigger signal, the current detecting means 53 detects a pulse current flowing through each of the phases of the synchronous motor 51 in synchronization with the pulse voltage.

The estimating means 63 calculates a current vector based on the amplitude of the pulse current. After that, the estimating means 63 estimates the initial magnetic pole position of the rotor based on the phase of a mean vector obtained by averaging the plurality of current vectors corresponding to the plurality of voltage command vectors, respectively.

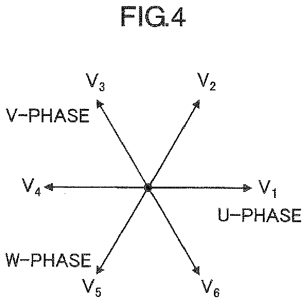

Subsequently, referring to FIGS. 4 to 9, a method of estimating the initial magnetic pole position of the rotor is described in detail by way of a specific example.

FIG. 4 is an explanatory diagram illustrating the pulse voltages to be applied by the circuit means 52 of the conventional magnetic pole position estimation device for a synchronous motor. FIG. 4 illustrates voltage command vectors V1 to V6.

Referring to FIG. 4, the voltage command vectors have phase differences obtained by dividing 360 degrees into six equal degrees. Specifically, the voltage command vectors V1, V3, and V5 are set so as to align with the phases of U-phase, V-phase, and W-phase of the synchronous motor 51, respectively. Further, the voltage command vectors V2, V4, and V6 are set so as to align with intermediate phases between adjacent ones of U-phase, V-phase, and W-phase, respectively. Then, the pulse voltages corresponding to the voltage command vectors are applied to each of the phases of the synchronous motor 51.

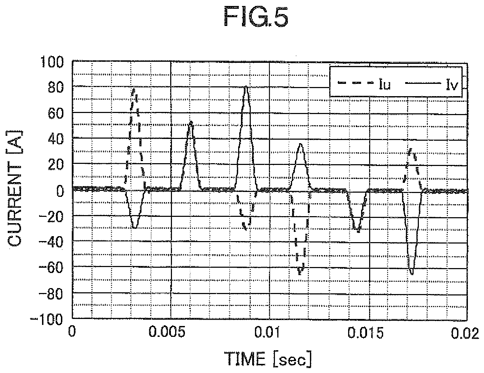

FIG. 5 is an explanatory diagram illustrating phase current response waveforms detected by the current detecting means 53 of the conventional magnetic pole position estimation device for a synchronous motor.

Referring to FIG. 5, the horizontal axis represents time and the vertical axis represents a current value. Further, FIG. 5 illustrates a current value Iu flowing through the U-phase of the synchronous motor 51 (see the broken line) and a current value Iv flowing through the V-phase thereof (see the solid line) . Note that, an ON time of the pulse voltage is set for individual motors so as to obtain a current to cause magnetic saturation. FIG. 5 illustrates the case where the ON time of the pulse voltage is set to 400 µsec.

On the other hand, an OFF time between adjacent pulse voltages is set arbitrarily within a range to avoid overlapping of current waveforms between the adjacent pulse voltages . Note that, a zero voltage at the time of switching the pulse voltage is generated by turning OFF all the gates of switching elements of each of the phases of the synchronous motor 51. FIG. 5 illustrates the case where the OFF time between adjacent pulse voltages is set to 2.4 msec.

In addition, an estimation time for the initial magnetic pole position of the rotor is set so as to satisfy predetermined requirements. For example, when the synchronous motor 51 is used for an elevator, the estimation time is set so that the estimation of the initial magnetic pole position of the rotor may be completed before brake releasing. Specifically, FIG. 5 illustrates the case where the estimation time for the initial magnetic pole position of the rotor is set to 20 msec.

On this occasion, a current corresponding to the voltage command vector V1 appears at the timing of approximately 0.003 sec as a waveform having a predetermined polarity and a predetermined peak value. Similarly, a current corresponding to each of the voltage command vectors V2 to V6 appears at a predetermined timing as a waveform having a predetermined polarity and a predetermined peak value.

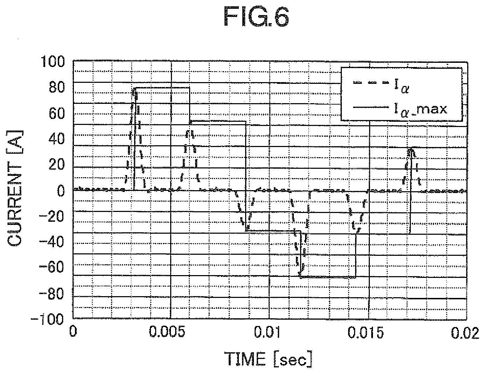

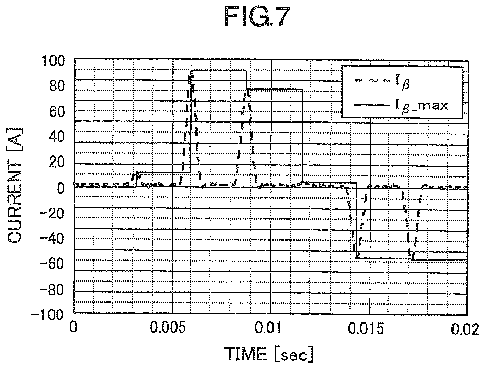

FIG. 6 is an explanatory diagram illustrating an α-phase current response waveform in the conventional magnetic pole position estimation device for a synchronous motor. Further, FIG. 7 is an explanatory diagram illustrating a β-phase current response waveform in the conventional magnetic pole position estimation device for a synchronous motor.

Referring to FIGS. 6 and 7, the horizontal axis represents time and the vertical axis represents a current value.

Further, FIG. 6 illustrates a current value Iα obtained by transforming the current value Iu flowing through the U-phase of the synchronous motor 51 and the current value Iv flowing through the V-phase thereof into the α-β coordinate system (stationary coordinate system). Further, FIG. 7 illustrates a current value I_{β} obtained by transforming the current value Iu flowing through the U-phase of the synchronous motor 51 and the current value Iv flowing through the V-phase thereof into the α - β coordinate system (stationary coordinate system).

As illustrated in FIGS. 6 and 7, the current values I_{α} and I_{β} are expressed as values having peak values at the same timings as those of the current values Iu and Iv. The peak values are each detected as the amplitude of the current obtained when the pulse voltage is applied.

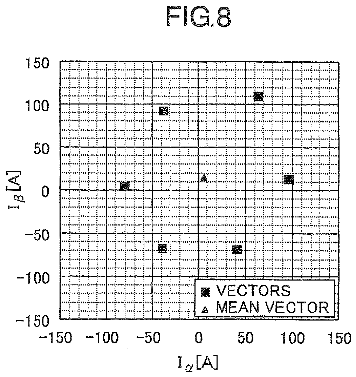

FIG. 8 is an explanatory diagram illustrating the locus of the current vectors calculated by the estimating means 63 of the conventional magnetic pole position estimation device for a synchronous motor.

Referring to FIG. 8, the horizontal axis represents the current value I_{α} and the vertical axis represents the current value I_{β}. In the figure, the tip of the current vector corresponding to each pulse voltage is represented by a square. Further, an integrated value of the current vectors, that is, the tip of a mean vector is represented by a triangle. In FIG. 8, the current vector in the d-axis direction of the d-g coordinate system (motor coordinate system) is extended, and the mean vector exhibits the d-axis direction as well.

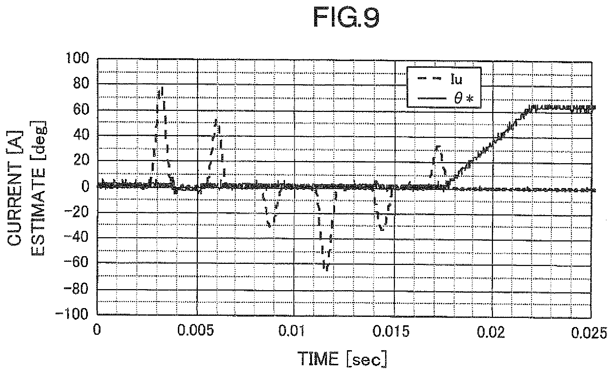

FIG. 9 is an explanatory diagram for illustrating convergence calculation of a magnetic pole estimate, which is performed by the conventional magnetic pole position estimation device for a synchronous motor.

Referring to FIG. 9, the horizontal axis represents time, and the vertical axis represents the current value Iu and an estimate of the initial magnetic pole position. Further, FIG. 9 illustrates the results of convergence calculation of the current value Iu and the phase θ* of the mean vector.

As illustrated in FIG. 9, it can be understood that the phase of the mean vector converges to a value of a little over 60 degrees after 0.022 sec. Note that, a convergence calculation time is set to an arbitrary time after the state of convergence is checked.

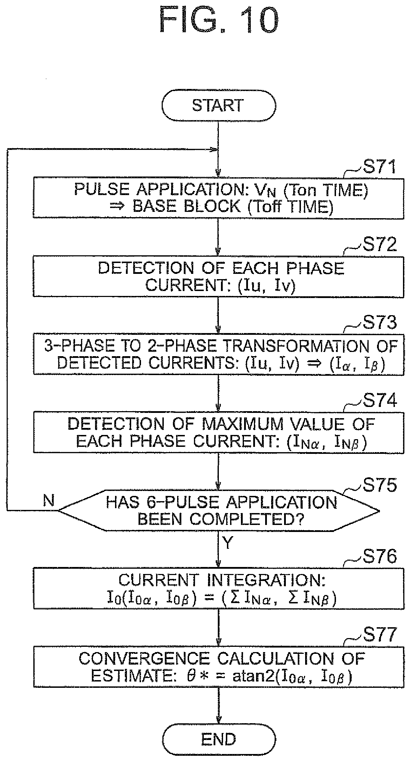

Next, referring to a flowchart of FIG. 10, an operation of the conventional magnetic pole position estimation device for a synchronous motor is described. FIG. 10 illustrates a series of operations described above with reference to FIGS. 3 to 9. Note that, the operation subject in Step S71 is the circuit means 52, the operation subject in Step S72 is the current detecting means 53, and the operation subject in Steps S73 to S77 is the estimating means 63.

First, the pulse voltage for magnetic pole position estimation is applied to each of the phases of the synchronous motor 51 (Step S71) .

Subsequently, the current value Iu flowing through the U-phase of the synchronous motor 51 and the current value Iv flowing through the V-phase thereof are detected (Step S72).

Next, the current value Iu and the current value Iv are transformed into the current value I_{α} and the current value I_{β} of the α-β coordinate system (Step S73).

Subsequently, a maximum value I_{Nα} of the current value I_{α} and a maximum value I_{Nβ} of the current value I_{β} are detected (Step S74) .

Next, it is judged whether or notall of the pulse voltages of six pulses have been applied to each of the phases of the synchronous motor 51 (Step S75).

When it is judged in Step S75 that all of the pulse voltages of six pulses have not been applied to each of the phases of the synchronous motor 51 (that is, No), the processing proceeds to Step S71.

On the other hand, when it is judged in Step S75 that all of the pulse voltages of six pulses have been applied to each of the phases of the synchronous motor 51 (that is. Yes), a current integrated value I₀ (I_{0α}, I_{0β}) of the maximum values I_{Nα} of the current value I_{α} and the maximum values I_{Nβ} of the current value I_{β} is calculated (Step S76).

Subsequently, an estimate of the initial magnetic pole position of the rotor is determined through convergence calculation (Step S77), thereby completing the processing of FIG. 10.

As described above, according to the conventional magnetic pole position estimation device for a synchronous motor, the initial magnetic pole position of the rotor is estimated based on the phase of the mean vector obtained by averaging the plurality of current vectors corresponding to the plurality of voltage command vectors, respectively. Therefore, the initial magnetic pole position of the rotor can be estimated with higher precision than the range of an electrical angle of 60 degrees.

### Citation List

### Patent Literature

[PTL 1] JP 3663937 B2

### Summary of Invention

### Technical Problem

The conventional technology, however, has the following problem.

As described above, the ON time of the pulse current is set for individual motors so as to obtain a current to cause magnetic saturation, and hence the estimation result obtained by the estimating means 63 shows high-precise estimation of the initial magnetic pole position of the rotor.

Meanwhile, if the current is too small to cause sufficient magnetic saturation, the extension of the current vector in the d-axis direction due to a peak value of the pulse current corresponding to each of the voltage command vectors V1 to V6 is not so pronounced as that illustrated in FIG. 8, which poses a problem of low estimation precision of the initial magnetic pole position of the rotor.

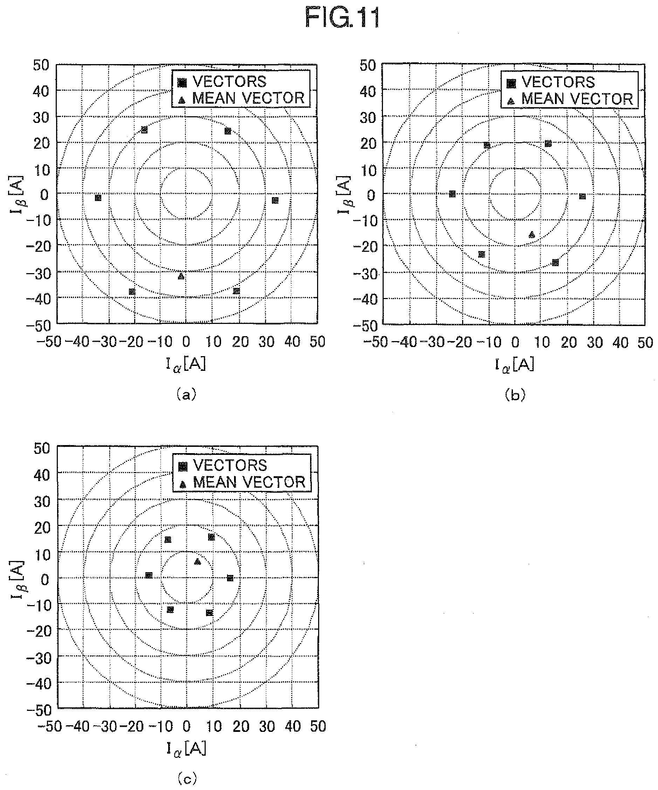

Here, as an example, FIGS. 11 illustrate the loci of current vectors obtained when the ON time of the pulse voltage is changed under the condition of a constant bus voltage in the conventional magnetic pole position estimation device for a synchronous motor.

FIG. 11(a) illustrates the locus of current vectors obtained when the ON time of the pulse voltage is a reference time t. Further, FIG. 11(b) illustrates the locus of current vectors obtained when the ON time of the pulse voltage is 0.75t. Further, FIG. 11(c) illustrates the locus of current vectors obtained when the ON time of the pulse voltage is 0.5t.

In FIGS. 11(a) and 11(b), the extension of the current vector in the d-axis direction is pronounced, and the absolute value of a mean vector is large. Therefore, the initial magnetic pole position of the rotor can be estimated with high precision.

In contrast, in FIG. 11(c), almost no extension of the current vector in the d-axis direction is observed, with the result that the current vectors corresponding to the pulse voltages of six pulses have a substantially circular locus and the absolute value of a mean vector is also small. It is therefore difficult to detect the initial magnetic pole position of the rotor, lowering the estimation precision of the initial magnetic pole position of the rotor.

As described above, if a sufficient current for magnetic saturation cannot be obtained, the estimation precision of the initial magnetic pole position of the rotor is lowered.

A possible condition under which a sufficient current for magnetic saturation cannot be obtained as described above is an unstable power supply voltage. In the situation in which the power supply voltage is unstable, a DC bus voltage may be reduced and the value of a pulse voltage (amplitude) itself may become smaller than a normal value. If the pulse voltage value itself becomes small, a sufficient current for magnetic saturation cannot be obtained because the ON time of the pulse voltage, which is set for individual motors, is constant, with the result that the estimation precision is lowered.

This causes an inappropriate start-up of the motor, causing a fear that temporary reverse rotation or a start-up failure may occur.

The present invention has been made to solve the above-mentioned problem, and it is therefore an object thereof to provide a magnetic pole position estimation device for a synchronous motor, which is capable of estimating an initial magnetic pole position of a rotor with high precision even when a power supply voltage is unstable.

### Solution to Problem

A magnetic pole position estimation device for a synchronous motor according to the present invention includes: voltage applying means for applying a voltage to each of phases of a synchronous motor based on a voltage command; current detecting means for detecting a current flowing through the each of the phases of the synchronous motor according to the applied voltage; storing means for storing a plurality of voltage command vectors having the same amplitude with phase differences obtained by equally dividing 360 degrees; voltage controlling means for causing the voltage applying means to sequentially switch and apply a plurality of pulse voltages for magnetic pole position estimation to the each of the phases of the synchronous motor based on the voltage commands obtained by transforming the plurality of voltage command vectors; estimating means for calculating a plurality of current vectors based on an amplitude of the current flowing through the each of the phases of the synchronous motor in synchronization with the plurality of pulse voltages for magnetic pole position estimation, and for estimating an initial magnetic pole position of a rotor of the synchronous motor based on a phase of a mean vector obtained by averaging two-phase transforms of the plurality of current vectors corresponding to the plurality of voltage command vectors, respectively; estimate correctness judging means for judging whether the initial magnetic pole position estimated by the estimating means is correct or incorrect based on a magnetic saturation judgment current value based on the current values detected by the current detecting means and a predetermined current threshold; current threshold storing means for storing the predetermined magnetic saturation current threshold; and pulse voltage application condition changing means for changing, when the estimate correctness judging means judges that the initial magnetic pole position estimated by the estimating means is incorrect, an application condition on the pulse voltage so that desired magnetic saturation occurs.

### Advantageous Effects of Invention

According to the magnetic pole position estimation device for a synchronous motor according to the present invention, the estimate correctness judging means judges whether the initial magnetic pole position estimated by the estimating means is correct or incorrect based on the detected current value detected by the current detecting means and the predetermined current threshold. Further, the current threshold storing means stores the predetermined current threshold. Further, when the estimate correctness judging means judges that the initial magnetic pole position estimated by the estimating means is incorrect, the pulse voltage application condition changing means changes the application condition on the pulse voltage so that the desired magnetic saturation occurs.

Therefore, even when the power supply voltage is unstable, the initial magnetic pole position of the rotor can be estimated with high precision.

### Brief Description of Drawings

[FIG. 1] A block configuration diagram illustrating a magnetic pole position estimation device for a synchronous motor according to Embodiment 1 of the present invention (Example 1).
[FIG. 2] A flowchart illustrating an operation of the magnetic pole position estimation device for a synchronous motor according to Embodiment 1 of the present invention (Example 1).
[FIG. 3] A block configuration diagram illustrating a conventional magnetic pole position estimation device for a synchronous motor.
[FIG. 4] An explanatory diagram illustrating pulse voltages to be applied by circuit means of the conventional magnetic pole position estimation device for a synchronous motor.
[FIG. 5] An explanatory diagram illustrating phase current response waveforms detected by current detecting means of the conventional magnetic pole position estimation device for a synchronous motor.
[FIG. 6] An explanatory diagram illustrating an α-phase current response waveform in the conventional magnetic pole position estimation device for a synchronous motor.
[FIG. 7] An explanatory diagram illustrating a β-phase current response waveform in the conventional magnetic pole position estimation device for a synchronous motor.
[FIG. 8] An explanatory diagram illustrating the locus of current vectors calculated by estimating means of the conventional magnetic pole position estimation device for a synchronous motor.
[FIG. 9] An explanatory diagram illustrating convergence calculation of a magnetic pole estimate, which is performed by the conventional magnetic pole position estimation device for a synchronous motor.
[FIG. 10] A flowchart illustrating an operation of the conventional magnetic pole position estimation device for a synchronous motor.
[FIGS. 11(a) to 11(c)] Explanatory diagrams illustrating the loci of current vectors obtained when an ON time of a pulse voltage is changed under the condition of a constant bus voltage in the conventional magnetic pole position estimation device for a synchronous motor.

### Description of Embodiment

Now, a preferred embodiment of a magnetic pole position estimation device for a synchronous motor according to the present invention is described with reference to the drawings. In the respective drawings, the same or corresponding parts are denoted by the same reference symbols for description.

### [Example 1]

### Embodiment 1

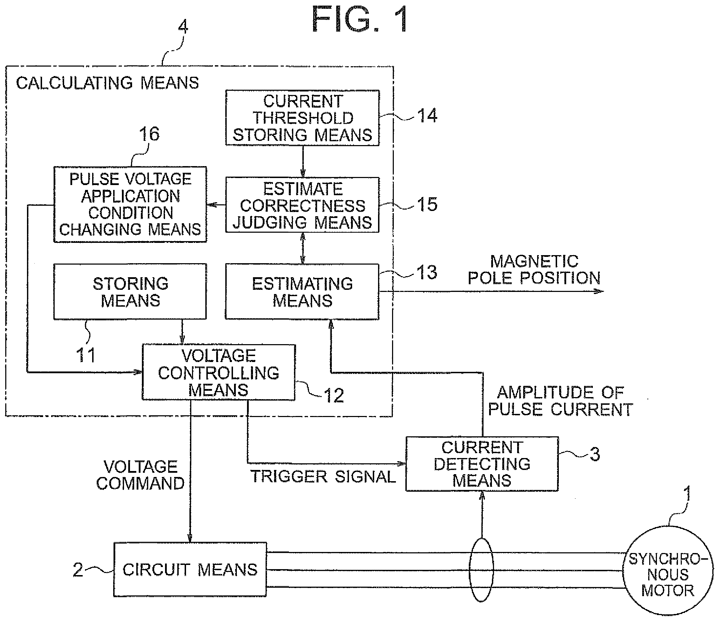

FIG. 1 is a block configuration diagram illustrating a magnetic pole position estimation device for a synchronous motor according to Embodiment 1 of the present invention.

Referring to FIG. 1, the magnetic pole position estimation device for a synchronous motor includes a synchronous motor 1, circuit means 2, current detecting means 3, and calculating means 4. Note that, the synchronous motor 1, the circuit means 2, and the current detecting means 3 are the same as the synchronous motor 51, the circuit means 52, and the current detecting means 53 illustrated in FIG. 3, respectively.

The calculating means 4 includes storing means 11, voltage controlling means 12, estimating means 13, current threshold storing means 14, estimate correctness judging means 15, and pulse voltage application condition changing means 16. Note that, the storing means 11, the voltage controlling means 12 , and the estimating means 13 are the same as the storing means 61, the voltage controlling means 62, and the estimating means 63 illustrated in FIG. 3, respectively.

The estimate correctness judging means 15 judges whether an initial magnetic pole position of the rotor estimated by the estimating means 13 has a small error with high precision or a large error with low precision, based on a magnetic saturation current threshold stored in the current threshold storing means 14.

Hereinafter, functions of the respective sections of the calculating means 4 as configured above are described. Description of the same functions as those of the conventional calculating means 54 illustrated in FIG. 3 is omitted.

The current threshold storing means 14 stores, as the magnetic saturation current threshold, a pulse current peak value which is capable of obtaining sufficient magnetic saturation for securing estimation precision of the initial magnetic pole position of the rotor. In this case, the current threshold storing means 14 stores, as the magnetic saturation current threshold, a peak value of α-phase and β-phase pulse currents obtained by transforming U-phase and V-phase pulse currents into the α-β coordinate system.

The estimate correctness judging means 15 compares a pulse current amplitude calculated by the estimating means 13 to the magnetic saturation current threshold stored in the current threshold storing means 14. Further, when the pulse current amplitude has a value larger than the magnetic saturation current threshold, the estimate correctness judging means 15 judges that sufficient magnetic saturation for securing the estimation precision has been obtained and judges that the estimation result of the initial magnetic pole position of the rotor obtained by the estimating means 13 is correct. On the other hand, when the pulse current amplitude has a value smaller than the magnetic saturation current threshold, the estimate correctness judging means 15 judges that sufficient magnetic saturation for securing the estimation precision has not been obtained and judges that the estimation result of the initial magnetic pole position of the rotor obtained by the estimating means 13 is incorrect.

When the estimate correctness judging means 15 judges that the estimation result of the initial magnetic pole position of the rotor is incorrect, the pulse voltage application condition changing means 16 sets an ON time of the pulse current to be larger than a time which is preset for individual motors so that an amount of current for causing sufficient magnetic saturation may flow.

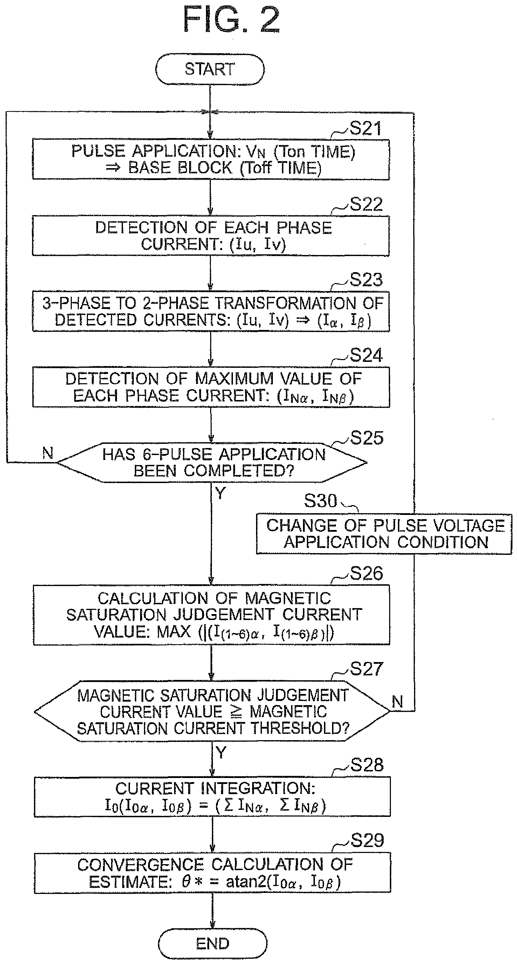

Next, referring to a flowchart of FIG. 2, an operation of the magnetic pole position estimation device for a synchronous motor according to Embodiment 1 is described. FIG. 2 illustrates a series of operations of the magnetic pole position estimation device for a synchronous motor. Note that. Steps S21 to S25, Step S28, and Step S29 of FIG. 2 are the same as Steps S71 to S77 illustrated in FIG. 10, respectively, and hence description thereof is omitted.

First, when it is judged in Step S25 that all of the pulse voltages of six pulses have been applied to each of the phases of the synchronous motor 51 (that is, Yes), the estimate correctness judging means 15 calculates a magnetic saturation judgement current value based on the detection results of Step S24 (Step S26).

Specifically, the estimate correctness judging means 15 calculates the absolute values of 12 pulses in total of the maximum values I_{Nα} of the current value I_{α} for six pulses and the maximum values I_{Nβ} of the current value I_{β} for six pulses, which are detected in Step S24, and extracts a pulse current peak value having the maximum amplitude among the 12 pulses as the magnetic saturation judgement current value.

Subsequently, the estimate correctness judging means 15 judges whether or not the magnetic saturation judgement current value calculated in Step S26 is equal to or larger than the magnetic saturation current threshold stored in the current threshold storing means 14 (Step S27).

When it is judged in Step S27 that the magnetic saturation judgement current value is equal to or larger than the magnetic saturation current threshold (that is, Yes), which means that sufficient magnetic saturation has been obtained and accordingly a correct estimation result of the initial magnetic pole position of the rotor can be obtained, the processing proceeds to Step S28.

On the other hand, when it is judged in Step S27 that the magnetic saturation judgement current value is not equal to or larger than the magnetic saturation current threshold (that is, No), which means that sufficient magnetic saturation has not been obtained and accordingly a correct estimation result of the initial magnetic pole position of the rotor cannot be obtained, the processing proceeds to Step S30.

In this case, the pulse voltage application condition changing means 16 sets the ON time of the pulse current to be larger than the time which is preset for individual motors so that an amount of current for causing sufficient magnetic saturation may flow (Step S30), and the processing proceeds to Step S21. For example, the pulse voltage application condition changing means 16 sets a larger set value for one cycle of the calculation cycle.

As described above, according to Embodiment 1, the estimate correctness judging means judges whether the initial magnetic pole position estimated by the estimating means is correct or incorrect based on a detected current value detected by the current detecting means and a predetermined current threshold. Further, the current threshold storing means stores the predetermined current threshold. Further, when the estimate correctness judging means judges that the initial magnetic pole position estimated by the estimating means is incorrect, the pulse voltage application condition changing means changes the application condition on the pulse voltage so that desired magnetic saturation may occur.

Therefore, even when the power supply voltage is unstable, the initial magnetic pole position of the rotor can be estimated with high precision.

Further, the synchronous motor has three phases, and the estimating means calculates current vectors based on the amplitudes of currents flowing two of the three phases of the synchronous motor in synchronization with the pulse voltages for magnetic pole position estimation, to thereby estimate the initial magnetic pole position of the rotor. Therefore, the initial magnetic pole position of the rotor can be estimated with ease and high precision by directly using the calculating means, which is used in ordinary motor control. Besides, an additional device is not necessary and hence the magnetic pole position estimation device can be made compact. It should be understood that the current vectors may be calculated by detecting the currents flowing through three phases.

In addition, the calculating means sets three phases of the voltage command vectors so as to align with three phases of the synchronous motor, and sets other three phases of the voltage command vectors so as to align with intermediate phases between adjacent ones of the three phases of the synchronous motor. The voltage commands to the circuit means can thus be simplified.

Further, the calculating means generates a zero voltage at the time of switching the pulse voltage for initial magnetic pole position estimation by turning OFF all of the gates of switching elements of each of the phases of the synchronous motor. An estimation time for the initial magnetic pole position of the rotor can thus be shortened.

Note that. Embodiment 1 described above has exemplified the case where the current threshold storing means 14 stores, as the magnetic saturation current threshold, a pulse current peak value which is capable of obtaining sufficient magnetic saturation for securing the estimation precision of the initial magnetic pole position of the rotor, and specifically, the current threshold storing means 14 stores, as the magnetic saturation current threshold, a peak value of α-phase and β-phase pulse currents obtained by transforming U-phase and V-phase pulse currents into the α-β coordinate system. However, the present invention is not limited thereto, and another value may be stored as the magnetic saturation current threshold.

Specifically, for example, in Step S26 described above, when it is judged that all the pulse voltages of six pulses have been applied to each of the phases of the synchronous motor 51, an average value of the maximum values I_{Nα} of the current value I_{α} for six pulses and an average value of the maximum values I_{Nβ} of the current value I_{β} for six pulses, which are detected in Step S26, may be calculated, and the respective absolute values thereof may be compared to a threshold.

In this case, the current threshold storing means 14 stores, as the magnetic saturation current threshold, an average value of peak values of α-β axis pulse currents for six pulses, which is capable of obtaining sufficient magnetic saturation for securing the estimation precision of the initial magnetic pole position of the rotor.

As illustrated in FIG. 11(c) described above, when no magnetic saturation occurs, a value obtained by projecting the mean vector in the α axis or β axis is near 0. On the other hand, as illustrated in FIGS. 11(a) and 11(b), when magnetic saturation occurs, a value obtained by projecting the mean vector in the α axis or β axis is a value extending in the d-axis direction, rather than near 0.

Such characteristics enable judgement on the presence/absence of magnetic saturation, thereby judging the correctness of an estimate of the initial magnetic pole position of the rotor. Note that, it is also possible to judge the presence/absence of magnetic saturation based on the magnitude of the mean vector from the zero point, thereby judging the correctness of an estimate of the initial magnetic pole position of the rotor.

Further, alternatively, when it is judged in Step S26 described above that all the pulse voltages of six pulses have been applied to each of the phases of the synchronous motor 51, a difference value between a maximum value and a minimum value of the maximum values I_{Nα} of the current value I_{α} for six pulses or a difference value between a maximum value and a minimum value of the maximum values I_{Nβ} of the current value I_{β} for six pulses, which are detected in Step S26, may be compared to a threshold.

In this case, the current threshold storing means 14 stores, as the magnetic saturation current threshold, a difference value between a maximum value and a minimum value of peak values of α-β axis pulse currents for six pulses, which is capable of obtaining sufficient magnetic saturation for securing the estimation precision of the initial magnetic pole position of the rotor.

As illustrated in FIG. 11(c) described above, when no magnetic saturation occurs , the difference value between the maximum value and the minimum value of the current vectors is near 0 because the locus of the current vectors is substantially circular. On the other hand, as illustrated in FIGS. 11(a) and 11(b), when magnetic saturation occurs, the difference value between the maximum value and the minimum value of the current vectors has a large value because of the extension of the current.

Such characteristics enable judgement on the presence/absence of magnetic saturation, thereby judging the correctness of an estimate of the initial magnetic pole position of the rotor.

Further, in the above description of Embodiment 1, the current threshold storing means 14 stores a current value obtained by transforming a three-phase (U, V, and W) current into a two-phase (α, β) current as the magnetic saturation current threshold. However, the present invention is not limited thereto, and the three-phase current may be stored directly.

Specifically, for example, when it is judged in Step S26 described above that all the pulse voltages of six pulses have been applied to each of the phases of the synchronous motor 51, it is also possible to compare, to a threshold, a pulse current value having the maximum absolute value of amplitude among 18 pulses in total of maximum values I_{Nu} of the current value Iu of the three-phase current for six pulses, maximum values I_{Nv} of the current value Iv of the three-phase current for six pulses, and maximum values I_{NW} of a current value Iw of the three-phase current for six pulses, the current value Iu, the current value Iv, and the current value Iw being detected in Step S22.

Further, in the case where the magnetic saturation judgement current value is slightly smaller than the magnetic saturation current threshold and where the ON time of the pulse voltage cannot be set larger any more, if the estimation precision of the initial magnetic pole position of the rotor is judged to be low and accordingly the synchronous motor 1 cannot be started up, Steps S21 to S27 of the flowchart of FIG. 2 may be repeated a plurality of times so as to judge an average value of the obtained estimates as the magnetic pole position and then start up the motor. This makes it possible to avoid the case where the motor cannot be started up as much as possible.

This is also applicable to, for example, a rescue operation of an elevator. It is possible to rescue passengers while suppressing the influence on the riding comfort as much as possible, to thereby enhance the reliability of the elevator. Note that, the case is limited to a case where it is already experimentally known that a difference between the magnetic saturation judgement current value and the magnetic saturation current threshold is not such a large value as to cause a start-up failure.

Further, by applying the above description, the following is possible.

If the DC bus voltage is unstable and the voltage is increased, there occurs a phenomenon that the ON time of the pulse voltage, which is set for individual motors, produces an excessively large pulse current. Such extra increase in pulse voltage may cause demagnetization of the permanent magnet. It is therefore necessary to avoid the phenomenon.

Accordingly, with an upper threshold of the pulse current being set to the magnetic saturation current threshold stored in the current threshold storing means 14, if an excessive current flows (i.e., the pulse current is increased excessively), the ON time of the pulse voltage is shortened to an appropriate time so as to obtain an appropriate current for estimating the initial magnetic pole position of the rotor, to thereby prevent the demagnetization of the permanent magnet of the motor.

The provision of the threshold for judging magnetic saturation in the pulse current and the upper threshold for judging avoidance of demagnetization of the permanent magnet of the motor enables the setting of an ON time of the pulse voltage which is optimal for estimating the initial magnetic pole position of the rotor. Therefore, as countermeasures for different ease of magnetic saturation due to individual differences in manufacturing of the motors, optimization to an appropriate current can be automatically performed.

Further, in general, the ease of magnetic saturation varies for each motor. Usually, the ON time of the pulse voltage needs to be set experimentally for each motor, and hence the designer needs to perform tuning for each motor. However, automatic tuning can be enabled to realize effort saving in designing.

## Claims

1. A magnetic pole position estimation device for a synchronous motor, comprising:
voltage applying means (2) for applying a voltage to each of phases of a synchronous motor (1) based on a voltage command;
current detecting means (3) for detecting a current flowing through the each of the phases of the synchronous motor (1) according to the applied voltage;
storing means (11) for storing a plurality of voltage command vectors having the same amplitude with phase differences obtained by equally dividing 360 degrees;
voltage controlling means (12) for causing the voltage applying means (2) to sequentially switch and apply a plurality of pulse voltages for magnetic pole position estimation to the each of the phases of the synchronous motor (1) based on the voltage commands obtained by transforming the plurality of voltage command vectors;
estimating means (13) for calculating a plurality of current vectors based on an amplitude of the current, and for estimating an initial magnetic pole position of a rotor of the synchronous motor (1) based on a phase of a mean vector obtained by averaging the plurality of current vectors corresponding to the plurality of voltage command vectors, respectively; **characterized in that**
the estimating means (13) is for calculating the plurality of current vectors based on the amplitude of the current flowing through the each of the phases of the synchronous motor (1) in synchronization with the plurality of pulse voltages for magnetic pole position estimation, and for estimating an initial magnetic pole position of a rotor of the synchronous motor (1) based on a phase of a mean vector obtained by averaging two-phase transforms of the plurality of current vectors corresponding to the plurality of voltage command vectors, respectively;
and **in that** the magnetic pole position estimation device comprises:
estimate correctness judging means (15) for judging whether the initial magnetic pole position estimated by the estimating means (13) is correct or incorrect based on a magnetic saturation judgment current value based on the current values detected by the current detecting means (3) and a predetermined magnetic saturation current threshold;
current threshold storing means (14) for storing the predetermined magnetic saturation current threshold; and
pulse voltage application condition changing means (16) for changing, when the estimate correctness judging means (15) judges that the initial magnetic pole position estimated by the estimating means (13) is incorrect, an application condition on the pulse voltage so that desired magnetic saturation occurs.

2. A magnetic pole position estimation device for a synchronous motor according to claim 1, wherein the pulse voltage application condition changing means (16) sets an ON time of the pulse voltage in a variable manner.

3. A magnetic pole position estimation device for a synchronous motor according to claim 1 or 2, wherein the current threshold storing means (14) stores, as the predetermined magnetic saturation current threshold, a peak value of an α-phase pulse current and a β-phase pulse current obtained by transforming a U-phase pulse current and a V-phase pulse current into an α-β coordinate system.

4. A magnetic pole position estimation device for a synchronous motor according to claim 1 or 2, wherein the current threshold storing means (14) stores, as the predetermined magnetic saturation current threshold, an average value of peak values of α-β axis pulse currents for six pulses.

5. A magnetic pole position estimation device for a synchronous motor according to claim 1 or 2, wherein the current threshold storing means (14) stores, as the predetermined magnetic saturation current threshold, a difference value between a maximum value and a minimum value of peak values of α-β axis pulse currents for six pulses.

6. A magnetic pole position estimation device for a synchronous motor according to claim 1 or 2, wherein the current threshold storing means (14) stores, as the predetermined magnetic saturation current threshold, a peak current value of current values of a three-phase current.

7. A magnetic pole position estimation device for a synchronous motor according to any one of claims 1 to 6, wherein the estimating means (13) repeatedly performs estimation of the initial magnetic pole position a plurality of times, and determines an average value of obtained estimates as the initial magnetic pole position.

8. A magnetic pole position estimation device for a synchronous motor according to any one of claims 1 to 7, wherein the current threshold storing means (14) sets an upper threshold and a lower threshold in the predetermined magnetic saturation current threshold.

9. A magnetic pole position estimation device for a synchronous motor according to any one of claims 1 to 8, wherein:
the synchronous motor (1) has three phases; and
the estimating means (13) calculates the plurality of current vectors by coordinate transform based on amplitudes of currents flowing through two of the three phases in synchronization with the plurality of pulse voltages for magnetic pole position estimation.

10. A magnetic pole position estimation device for a synchronous motor according to claim 9, wherein:
the storing means (11) stores the plurality of voltage command vectors having the same amplitude with phase differences obtained by dividing the 360 degrees into six equal degrees; and
the voltage controlling means (12) aligns three phases of the plurality of voltage command vectors with the three phases of the synchronous motor (1), and other three phases of the plurality of voltage command vectors with intermediate phases between adjacent phases of the three phases of the synchronous motor (1).

11. A magnetic pole position estimation device for a synchronous motor according to any one of claims 1 to 10, wherein, in switching the plurality of pulse voltages for magnetic pole position estimation, the voltage controlling means (12) generates a zero voltage by turning OFF all of gates of switching elements of the each of the phases.

## Patentansprüche

1. Eine Einrichtung zur Schätzung der Magnetpolposition für einen Synchronmotor, umfassend:
Spannungsanlegemittel (2) zum Anlegen einer Spannung an jede der Phasen eines Synchronmotors (1) auf der Grundlage eines Spannungsbefehls;
Stromerfassungsmittel (3) zum Erfassen eines durch jede der Phasen des Synchronmotors (1) fließenden Stroms gemäß der angelegten Spannung;
Speichermittel (11) zum Speichern einer Vielzahl von Spannungsbefehlsvektoren mit derselben Amplitude mit Phasendifferenzen, die durch gleiches Teilen von 360 Grad erhalten werden;
Spannungssteuerungsmittel (12), um die Spannungsanlegemittel (2) zu veranlassen, sequentiell zu schalten und eine Vielzahl von Impulsspannungen zur Magnetpolpositionsschätzung an jede der Phasen des Synchronmotors (1) auf der Grundlage der durch Transformation der Vielzahl von Spannungsbefehlsvektoren erhaltenen Spannungsbefehle anzulegen;
Schätzmittel (13) zum Berechnen einer Vielzahl von Stromvektoren auf der Grundlage einer Amplitude des Stroms und zum Schätzen einer anfänglichen Magnetpolposition eines Rotors des Synchronmotors (1) auf der Grundlage einer Phase eines mittleren Vektors, der durch Mitteln der Vielzahl von Stromvektoren, die jeweils der Vielzahl von Spannungsbefehlsvektoren entsprechen, erhalten wird; **dadurch gekennzeichnet, dass**
das Schätzmittel (13) zum Berechnen der Vielzahl von Stromvektoren auf der Grundlage der Amplitude des durch jede der Phasen des Synchronmotors (1) fließenden Stroms in Synchronisation mit der Vielzahl von Impulsspannungen zur Magnetpolpositionsschätzung und zum Schätzen einer anfänglichen Magnetpolposition eines Rotors des Synchronmotors (1) auf der Grundlage einer Phase eines mittleren Vektors, der durch Mittelung von Zweiphasen-Transformationen der Vielzahl von Stromvektoren, die jeweils der Vielzahl von Spannungssteuervektoren entsprechen, erhalten wird, dient;
und dass die Einrichtung zur Schätzung der Magnetpolposition umfasst:
Schätzkorrektheitsbeurteilungsmittel (15) zum Beurteilen, ob die durch das Schätzmittel (13) geschätzte anfängliche Magnetpolposition korrekt oder inkorrekt ist, auf der Grundlage eines magnetischen Sättigungsbeurteilungsstromwertes auf der Grundlage der durch das Stromerfassungsmittel (3) erfassten Stromwerte und einer vorbestimmten magnetischen Sättigungsstromschwelle;
Stromschwellenwertspeichermittel (14) zum Speichern der vorbestimmten magnetischen Sättigungsstromschwelle; und
Pulsspannungsanlegebedingungsänderungsmittel (16) zum Ändern einer Anlegebedingung an die Pulsspannung, so dass eine gewünschte magnetische Sättigung auftritt, wenn das Schätzkorrektheitsbeurteilungsmittel (15) beurteilt, dass die durch das Schätzmittel (13) geschätzte anfängliche Magnetpolposition inkorrekt ist.

2. Eine Einrichtung zur Schätzung der Magnetpolposition für einen Synchronmotor nach Anspruch 1, wobei das Pulsspannungsanlegebedingungsänderungsmittel (16) eine EIN-Zeit der Pulsspannung in einer variablen Weise einstellt.

3. Eine Einrichtung zur Schätzung der Magnetpolposition für einen Synchronmotor nach Anspruch 1 oder 2, wobei das Stromschwellenwertspeichermittel (14) als die vorbestimmte magnetische Sättigungsstromschwelle einen Spitzenwert eines α-Phasenpulsstroms und eines β-Phasenpulsstroms speichert, die durch Transformieren eines U-Phasenpulsstroms und eines V-Phasenpulsstroms in ein α-β-Koordinatensystem erhalten werden.

4. Eine Einrichtung zur Schätzung der Magnetpolposition für einen Synchronmotor nach Anspruch 1 oder 2, wobei das Stromschwellenwertspeichermittel (14) als den vorbestimmten magnetischen Sättigungsstromschwellenwert einen Mittelwert von Spitzenwerten von α-β-Achsenpulsströmen für sechs Impulse speichert.

5. Eine Einrichtung zur Schätzung der Magnetpolposition für einen Synchronmotor nach Anspruch 1 oder 2, wobei das Stromschwellenwert-Speichermittel (14) als den vorbestimmten magnetischen Sättigungsstromschwellenwert einen Differenzwert zwischen einem Maximalwert und einem Minimalwert von Spitzenwerten von α-β-Achsenpulsströmen für sechs Impulse speichert.

6. Eine Einrichtung zur Schätzung der Magnetpolposition für einen Synchronmotor nach Anspruch 1 oder 2, wobei das Stromschwellenwertspeichermittel (14) als die vorbestimmte magnetische Sättigungsstromschwelle einen Spitzenstromwert von Stromwerten eines Dreiphasenstroms speichert.

7. Eine Einrichtung zur Schätzung der Magnetpolposition für einen Synchronmotor nach einem der Ansprüche 1 bis 6, wobei das Schätzmittel (13) eine Schätzung der anfänglichen Magnetpolposition eine Vielzahl von Malen wiederholt durchführt und einen Mittelwert der erhaltenen Schätzungen als die anfängliche Magnetpolposition bestimmt.

8. Eine Einrichtung zur Schätzung der Magnetpolposition für einen Synchronmotor nach einem der Ansprüche 1 bis 7, wobei das Stromschwellenspeichermittel (14) eine obere Schwelle und eine untere Schwelle in der vorbestimmten magnetischen Sättigungsstrom-Schwelle einstellt.

9. Eine Einrichtung zur Schätzung der Magnetpolposition für einen Synchronmotor nach einem der Ansprüche 1 bis 8, wobei:
der Synchronmotor (1) drei Phasen hat; und
das Schätzmittel (13) die Vielzahl von Stromvektoren durch Koordinatentransformation auf der Grundlage von Amplituden von Strömen, die durch zwei der drei Phasen fließen, synchron mit der Vielzahl von Pulsspannungen für die Magnetpolpositionsschätzung berechnet.

10. Eine Einrichtung zur Schätzung der Magnetpolposition für einen Synchronmotor nach Anspruch 9, wobei
das Speichermittel (11) die Vielzahl von Spannungsbefehlsvektoren mit der gleichen Amplitude mit Phasendifferenzen speichert, die durch Teilen der 360 Grad in sechs gleiche Grad erhalten werden; und
das Spannungssteuerungsmittel (12) drei Phasen der Vielzahl von Spannungsbefehlsvektoren mit den drei Phasen des Synchronmotors (1) ausrichtet und andere drei Phasen der Vielzahl von Spannungsbefehlsvektoren mit Zwischenphasen zwischen benachbarten Phasen der drei Phasen des Synchronmotors (1) ausrichtet.

11. Eine Einrichtung zur Schätzung der Magnetpolposition für einen Synchronmotor nach einem der Ansprüche 1 bis 10, wobei beim Schalten der Vielzahl von Pulsspannungen für die Magnetpolpositionsschätzung das Spannungssteuerungsmittel (12) eine Nullspannung erzeugt, indem es alle Tore der Schaltelemente jeder der Phasen ausschaltet.

## Revendications

1. Dispositif d'estimation de position de pôle magnétique pour un moteur synchrone, comprenant :
un moyen d'application de tension (2) pour appliquer une tension à chacune des phases d'un moteur synchrone (1) sur la base d'une instruction de tension ;
un moyen de détection de courant (3) pour détecter un courant circulant à travers les chacune des phases du moteur synchrone (1) en fonction de la tension appliquée ;
un moyen de stockage (11) pour stocker une pluralité de vecteurs d'instruction de tension ayant la même amplitude avec des différences de phase obtenus en divisant 360 degrés de manière égale ;
un moyen de commande de tension (12) pour amener le moyen d'application de tension (2) à commuter séquentiellement et à appliquer une pluralité de tensions d'impulsion pour une estimation de position de pôle magnétique à chacune des phases du moteur synchrone (1) sur la base des instructions de tension obtenues en transformant la pluralité de vecteurs d'instruction de tension ;
un moyen d'estimation (13) pour calculer une pluralité de vecteurs de courant sur la base d'une amplitude du courant, et pour estimer une position de pôle magnétique initiale d'un rotor du moteur synchrone (1) sur la base d'une phase d'un vecteur moyen obtenue en faisant la moyenne de la pluralité de vecteurs de courant correspondant à la pluralité de vecteurs d'instruction de tension, respectivement ; **caractérisé en ce que**
le moyen d'estimation (13) est destiné à calculer la pluralité de vecteurs de courant sur la base de l'amplitude du courant circulant à travers les chacune des phases du moteur synchrone (1) en synchronisation avec la pluralité de tensions d'impulsion pour une estimation de position de pôle magnétique, et à estimer une position de pôle magnétique initiale d'un rotor du moteur synchrone (1) sur la base d'une phase d'un vecteur moyen obtenue en faisant la moyenne de transformations biphasées de la pluralité de vecteurs de courant correspondant à la pluralité de vecteurs d'instruction de tension, respectivement ;
et **en ce que** le dispositif d'estimation de position de pôle magnétique comprend :
un moyen de détermination d'exactitude d'estimation (15) pour déterminer si la position de pôle magnétique initiale estimée par le moyen d'estimation (13) est exacte ou inexacte sur la base d'une valeur de courant de détermination de saturation magnétique basée sur les valeurs de courant détectées par le moyen de détection de courant (3) et d'un seuil de courant de saturation magnétique prédéterminé ;
un moyen de stockage de seuil de courant (14) pour stocker le seuil de courant de saturation magnétique prédéterminé ; et
un moyen de changement de condition d'application de tension d'impulsion (16) pour changer, lorsque le moyen de détermination d'exactitude d'estimation (15) détermine que la position de pôle magnétique initiale estimée par le moyen d'estimation (13) est inexacte, une condition d'application sur la tension d'impulsion de sorte qu'une saturation magnétique souhaitée survient.

2. Dispositif d'estimation de position de pôle magnétique pour un moteur synchrone selon la revendication 1, dans lequel le moyen de changement de condition d'application de tension d'impulsion (16) règle un temps de MARCHE de la tension d'impulsion d'une manière variable.

3. Dispositif d'estimation de position de pôle magnétique pour un moteur synchrone selon la revendication 1 ou 2, dans lequel le moyen de stockage de seuil de courant (14) stocke, en tant que seuil de courant de saturation magnétique prédéterminé, une valeur de crête d'un courant d'impulsion de phase α et d'un courant d'impulsion de phase β obtenue en transformant un courant d'impulsion de phase U et un courant d'impulsion de phase V en un système de coordonnées α-β.

4. Dispositif d'estimation de position de pôle magnétique pour un moteur synchrone selon la revendication 1 ou 2, dans lequel le moyen de stockage de seuil de courant (14) stocke, en tant que seuil de courant de saturation magnétique prédéterminé, une valeur moyenne de valeurs de crête de courants d'impulsion d'axe α-β pour six impulsions.

5. Dispositif d'estimation de position de pôle magnétique pour un moteur synchrone selon la revendication 1 ou 2, dans lequel le moyen de stockage de seuil de courant (14) stocke, en tant que seuil de courant de saturation magnétique prédéterminé, une valeur de différence entre une valeur maximum et une valeur minimum de valeurs de crête de courants d'impulsion d'axe α-β pour six impulsions.

6. Dispositif d'estimation de position de pôle magnétique pour un moteur synchrone selon la revendication 1 ou 2, dans lequel le moyen de stockage de seuil de courant (14) stocke, en tant que seuil de courant de saturation magnétique prédéterminé, une valeur de courant de crête de valeurs de courant d'un courant triphasé.

7. Dispositif d'estimation de position de pôle magnétique pour un moteur synchrone selon l'une quelconque des revendications 1 à 6, dans lequel le moyen d'estimation (13) effectue de manière répétée une estimation de la position de pôle magnétique initiale plusieurs fois, et détermine une valeur moyenne d'estimations obtenues comme la position de pôle magnétique initiale.

8. Dispositif d'estimation de position de pôle magnétique pour un moteur synchrone selon l'une quelconque des revendications 1 à 7, dans lequel le moyen de stockage de seuil de courant (14) règle un seuil supérieur et un seuil inférieur dans le seuil de courant de saturation magnétique prédéterminé.

9. Dispositif d'estimation de position de pôle magnétique pour un moteur synchrone selon l'une quelconque des revendications 1 à 8, dans lequel :
le moteur synchrone (1) a trois phases ; et
le moyen d'estimation (13) calcule la pluralité de vecteurs de courant par transformation de coordonnées sur la base d'amplitudes de courants circulant à travers deux des trois phases en synchronisation avec la pluralité de tensions d'impulsion pour une estimation de position de pôle magnétique.

10. Dispositif d'estimation de position de pôle magnétique pour un moteur synchrone selon la revendication 9, dans lequel :
le moyen de stockage (11) stocke la pluralité de vecteurs d'instruction de tension ayant la même amplitude avec des différences de phase obtenus en divisant les 360 degrés en six degrés égaux ; et
le moyen de commande de tension (12) aligne trois phases de la pluralité de vecteurs d'instruction de tension avec les trois phases du moteur synchrone (1), et trois autres phases de la pluralité de vecteurs d'instruction de tension avec des phases intermédiaires entre des phases adjacentes des trois phases du moteur synchrone (1).

11. Dispositif d'estimation de position de pôle magnétique pour un moteur synchrone selon l'une quelconque des revendications 1 à 10, dans lequel, en commutant la pluralité de tensions d'impulsion pour une estimation de position de pôle magnétique, le moyen de commande de tension (12) génère une tension nulle en arrêtant toutes les grilles d'éléments de commutation des chacune des phases.
